# EUROPEAN PATENT SPECIFICATION

(11) **EP 3 696 586 B1**
(45) Date of publication and mention of the grant of the patent: **09.03.2022**
(21) Application number: 20154088.7
(22) Date of filing: 28.01.2020
(51) Int. Cl.: G02B 6/44, B65H 59/00

(54) **OPTICAL CABLE TENSIONING MEMBER, SYSTEM AND METHOD**
OPTISCHES KABELSPANNELEMENT, -SYSTEM UND -VERFAHREN
ÉLÉMENT DE TENSION DE CÂBLE OPTIQUE, SYSTÈME ET PROCÉDÉ

(30) Priority: 30.01.2019 IT 201900001385
(43) Date of publication of application: 19.08.2020
(73) Proprietor: Prysmian S.p.A., 20126 Milano (IT)
(72) Inventor: PERA GOLZALVEZ, Gerard, 20126 Milano (IT); ABBIATI, Fabio, 20126 Milano (IT)
(74) Representative: Colombo, Stefano Paolo

(56) References cited:
- EP-A1- 0 331 479
- EP-A1- 2 860 569
- GB-A- 2 241 221
- US-A- 5 894 540
- US-A1- 2010 260 464

## Description

### BACKGROUND

The present disclosure relates to the field of indoor installation of optical cables. In particular, the present disclosure relates to an optical cable tensioning member, an optical cable tensioning system and a method of tensioning an optical cable.

### STATE OF THE ART

An FTTH ("Fiber To The Home") network is an optical access network providing a number of end users with broadband communication services, i.e. with services requiring data transmission at a rate of some hundreds of Mbit/s or more.

Typically, an FTTH network comprises a distribution cabinet which cooperates with an access network and which is typically located in the basement of a building where the end users reside. An optical trunk cable, that will be termed hereinafter riser cable, exits the distribution cabinet and runs through the building from the basement up to all the building floors.

At each floor of the building, the riser cable may be optically connected to one or more drop optical cables. Each drop cable is typically terminated at its far end by a respective customer termination box located within or in proximity of the apartment or office of an end user.

When installing an optical cable for FTTH network in buildings, it is preferred that the cable runs along a straight line to limit visual impact.

In order to maintain a cable along a straight line, clips can be used.

US 2011/0089284 A1 discloses a cable tensioning device including a sheave bracket assembly comprising a plurality of sheaves; and an outlet cable guide attached to the sheave bracket assembly, wherein when tension applied to a cable engaging the sheave bracket assembly reaches a first threshold level, the sheave bracket assembly is adapted to move from a wound state to an unwound state to decrease a path length of the cable with respect to the outlet cable guide.

JP 2008216899 discloses a fiber cable winder which is installed in the indoor lead-in area Fa of an optical fiber cable F for the purpose of winding the surplus portion Fb. The cable winder is configured to have a base; a fixing part which is provided to the base to fix a part of the surplus portion on the base; a winding shaft one end of which is connected to the base and which takes up the surplus portion Fb on its outer peripheral face; a rotary part which is installed on the other end of the winding shaft and provided relatively rotatable about the axial line of the winding shaft with respect to the base; and a sliding support, which is provided to the rotary part and which slidably supports the region of the surplus portion Fb closer to the rotary part side from the portion fixed to the fixing part with respect to the rotary part. US 2010/260464 A1 discloses an optical cable tensioning member according to the preamble of claim 1.

### SUMMARY

The Applicant has noticed that the use of clips should be prevented for both visual impact and possible force exerted on the optical cable that may increase attenuation in the optical fibers. Also, the usage of glue may cause damages on the wall paper, wall paint, etc.

The Applicant has also noticed that the cable tensioning device of US 2011/0089284 A1 is rather complicated, bulky and is not adapted to tension an optical cable in such a manner that it runs close to a wall or to a corner between two walls.

The Applicant has also noticed that the fiber cable winder of JP 2008216899 is bulky and not adapted to be installed on a wall. The fiber cable winder is also not adapted to tension an optical cable in such a manner that it runs close to a wall or to a corner between two walls.

The Applicant has then faced the problem of providing an optical cable tensioning member, an optical cable tensioning system and a method of tensioning an optical cable which overcomes, at least partially, the aforesaid drawbacks.

In particular, the Applicant has tackled the problem of providing an optical cable tensioning member which may be adapted to tension an optical cable in such a manner that the cable runs close to a wall or to a corner, for instance formed between two walls.

According to embodiments of the present disclosure, the above problem is solved by a tensioning member comprising a mandrel which comprises two facing brackets which are configured to move away one from the other in order to expand the section of the mandrel. In this way, an optical cable which is loop wound on the mandrel increases its tension.

Therefore, according to a first aspect, the present disclosure provides for an optical cable tensioning member comprising an expandable mandrel, wherein said expandable mandrel comprises a first bracket and a second bracket forming a cable winding circumference, the first bracket having a first inner surface and the second bracket having a second inner surface which is at a distance from said first inner surface, wherein said expandable mandrel further comprises a rotatable central member which is configured, when turned, to increase said distance and expand said cable winding circumference.

The rotatable central member could be eccentric so that when the rotatable central member is turned, said distance between the inner surfaces of the brackets is increased.

The first inner surface may comprise first teeth, the second inner surface may comprise second teeth and the rotatable central member may comprise first teeth configured to engage with the first teeth of the first inner surface and second teeth configured to engage with second teeth of the second inner surface.

Preferably, the first teeth of the first inner surface have a first orientation and the second teeth of the second inner surface have a second orientation, wherein said first orientation is opposite with respect to the second orientation.

According to embodiments, the rotatable central member is a toothed wheel with a circular cross section engaging with toothed racks connected to respective brackets.

Preferably, a sprocket engages the teeth of at least one toothed rack.

The tensioning member may further comprise a linear rail guide for moving the first and second brackets along said linear rail guide.

The tensioning member could also comprise a box. In embodiments, the box comprises a first housing portion for the tensioning member and a second housing portion for an extra length of optical cable.

The box could have a first long side, a second long side, a first lateral side and a second lateral side, wherein a first entry/exit opening is provided at the first lateral side, in close proximity with the first long side of the box and wherein a second entry/exit opening is provided at the second lateral side, in close proximity with the first long side of the box.

According to a second aspect, the present disclosure provides an optical cable tensioning system comprising at least a first tensioning member of the above type and at least a second tensioning member according to any of preceding claims and a length of optical fiber cable tensioned between said first and second tensioning members.

Finally, according to a third aspect, the present disclosure provides a method of tensioning an optical cable, the method comprising winding an optical cable on the periphery of an expandable mandrel, wherein said expandable mandrel comprises two facing brackets and a rotatable central member hinged centrally between the two brackets, wherein the step of tensioning comprises expanding a distance between the two facing brackets by rotating said rotatable central member.

In embodiments, the rotatable central member is eccentric and the step of expanding a distance between the two brackets comprises rotating the eccentric rotatable central member while it is engaging at least partially said first and second brackets to force the brackets to move away one from the other. In other embodiments, the rotatable central member is a toothed wheel with a circular cross section engaging with toothed racks connected to respective brackets.

In embodiments, the engagement between the brackets and the eccentric rotatable central member is through teeth.

The step of expanding a distance between the two facing brackets may comprise linearly translating the brackets.

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

The present disclosure, in at least one of the aforementioned aspects, can be implemented according to one or more of the following embodiments, optionally combined together.

For the purpose of the present description and of the appended claims, the words "a" or "an" should be read to include one or at least one and the singular also includes the plural unless it is obvious that it is meant otherwise. This is done merely for convenience and to give a general sense of the disclosure.

### BRIEF DESCRIPTION OF THE FIGURES

The present disclosure will become fully clear after reading the following detailed description, given by way of example and not of limitation, with reference to the attached drawings wherein:
- Figure 1a schematically shows an optical cable tensioning member according to an embodiment of the present disclosure;
- Figure 1b shows the same member as of Figure 1a (enlarged) with two turns of optical cable around its peripheral surface;
- Figure 1c shows some geometrical measures;
- Figure 2 shows an optical cable tensioning member according to another embodiment of the present disclosure;
- Figure 3 shows guide rails for the two brakets of the mandrel;
- Figure 4 is a plan view of the member of Figures 1 associated with an exemplifying box; and
- Figure 5 schematically shows an optical cable tensioning system comprising two tensioning members.

### DETAILED DESCRIPTION

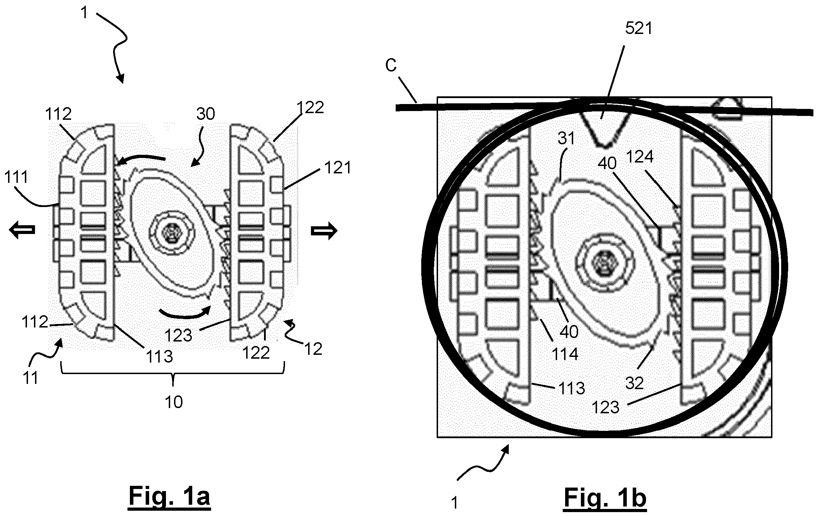

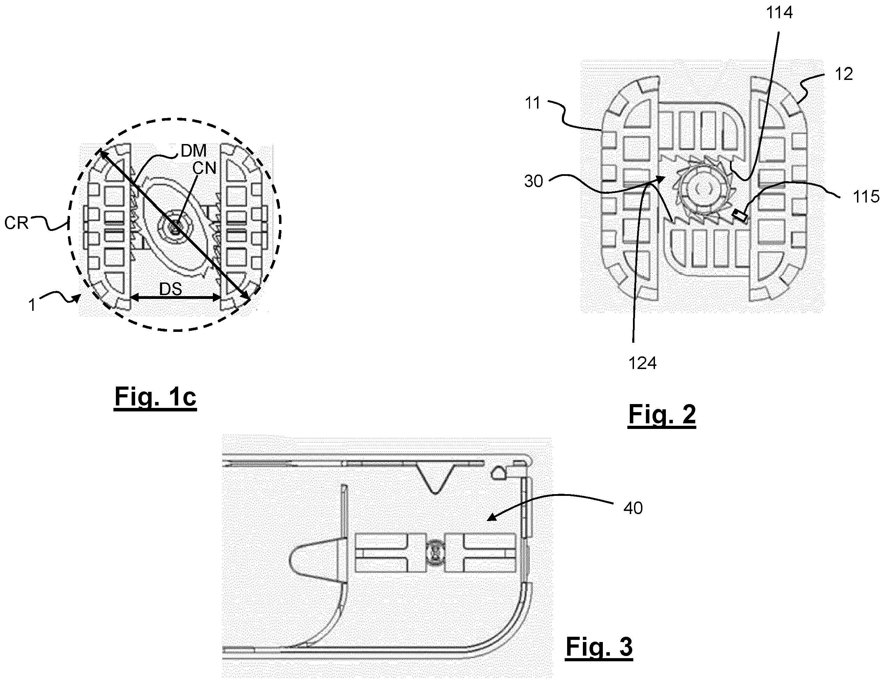

The optical cable tensioning member 1 according to the present invention can be a stand-alone member or it can be arranged into a box 50 (Figure 2). Figures 1a and 1b show a stand-alone optical cable tensioning member 1 according to an embodiment of the present invention.

The optical cable tensioning member 1 according to the present invention comprises an expandable mandrel 10 on which at least an optical fiber cable C can be loop wound. The optical fiber cable C can be wound onto the periphery of the expandable mandrel 10 once (through a single loop turn). In alternative (see Figure 1b), the optical fiber cable C can be wound onto the expandable mandrel 10 two or more times (through two, three or more loop turns). Preferably, the optical fiber cable C is wound from one to three times.

The mandrel 10 is expandable as it comprises at least two sections 11, 12 which are reciprocally movable to expand the cross-section of the mandrel 10 and to correspondingly increase the length of the cable turn around the periphery of the mandrel 10. When the mandrel is expanded, the winding diameter D is correspondingly increased.

According to an embodiment of the present invention, there are provided a first bracket 11 and a second bracket 12, with the two brackets being faced one to the other. Each facing bracket comprises an outer wall 111, 121. The outer wall 111, 121 of the two brackets 11, 12 forms the peripheral wall of the expandable mandrel 10. Preferably, the outer wall 111, 121 of each bracket comprises two rounded portions 112, 122. Preferably, each rounded portion 112, 122 follows a circumference part in order to define a substantially circular periphery of the mandrel 10 as shown in Figure 1b.

Each of the first and second bracket 11, 12 comprises an inner surface 113, 123. Preferably, the inner surface is straight and planar. Preferably, the inner surface of the first and second bracket is at least partially toothed, having respective teeth 114, 124.

Preferably, the teeth 114 of the first bracket 11 are directed or inclined in first direction while the teeth 124 of the second bracket 12 are directed on inclined in a second direction which is different from the first direction. Preferably, the two directions are opposite.

According to the present invention, a rotatable member is arranged centrally between the two brackets. Preferably, the rotatable member 30 is toothed.

The rotatable toothed member 30 is rotatable about a central axis and comprises a first set of teeth 31 configured to engage the teeth 114 of the first bracket 11. Similarly, the rotatable toothed member 30 comprises a second set of teeth 32 configured to engage the teeth 124 of the second bracket 12.

The rotatable toothed member 30 is preferably eccentric, not circular. Preferably, the eccentric rotatable toothed member 30 has a substantially elliptic cross section. In other embodiments, not shown in the drawings, the eccentric rotatable toothed member 30 has an ovoid shape. In any case, preferably, the eccentric rotatable toothed member 30 has a major axis which is longer than a minor axis.

The rotatable toothed member 30 can be rotated by a special key or tool (not shown) or by two fingers (for instance thumb and forefinger) of an user. In embodiments, the rotatable toothed member 30 comprises a cut (possibly along a diameter direction) on the top and can be rotated by a coin or a screw driver.

Preferably, the first set of teeth 31 is arranged on the periphery of a first quadrant while the second set of teeth 32 is arranged on the periphery of a second quadrant which is diametrically opposed to the first quadrant.

The optical cable tensioning member 1 preferably comprises a guide rail 40 (shown in Figure 3) for moving the two brackets 11, 12 along a guided path. Preferably, the guided path is a linear translation movement through which the inner surface 113, 123 of the first and second brackets maintain their reciprocal orientation. In the embodiment shown in the Figures, the inner surface 113, 123 of the first and second bracket maintain parallel.

With reference to Figures 1a, 1b and 1c, when the rotatable toothed member 30 is rotated counter-clockwise, the first bracket 11 move away from the second bracket 12 and the circumference CR of the expandable mandrel increases its diameter DM. As a consequence, the cable C which is wound on the expandable mandrel periphery becomes tensioned. With reference to Figure 1b, the cable C becomes tensioned on the right end. In the case of standalone system, the cable C can be tensioned from both ends.

For the purposes of the present disclosure and claims, with reference to Figure 1c, the winding circumference CR is the circumference having a diameter DM and center at CN. Diameter DM is the maximum distance between rounded portions 112, 122 of the outer surfaces of brackets 11, 12, calculated along a line passing through the center CN of rotatable member 30. Distance DS is the distance between inner facing surfaces 113, 123. When distance DS is increased, diameter DM increased and winding circumference CR increases accordingly.

The extra cable length capacity which the tensioning member is capable to absorb depends on the quantity of cable turns initially applied and the degrees with which the central rotatable toothed member is turned (max 90°).

Figure 2 shows a second embodiment of the present invention. The operation is similar to the operation of the first embodiment, with one central member 30 which can be rotated for expanding the distance DS between two facing brackets 11, 12 and therefore for increasing the winding diameter DM. Differently from the first embodiment, the central member 30 of the second embodiment is a toothed wheel having a circular cross section. The teeth 33 of central member 30 engage respective parallel racks 114, 124 connected to brackets 11 and 12, respectively. In order to prevent unwanted collapse of brackets 11, 12, a sprocket 115 can be provided. In this manner, rotation of central member 30 is allowed only in the direction which moves the brackets away one from the others.

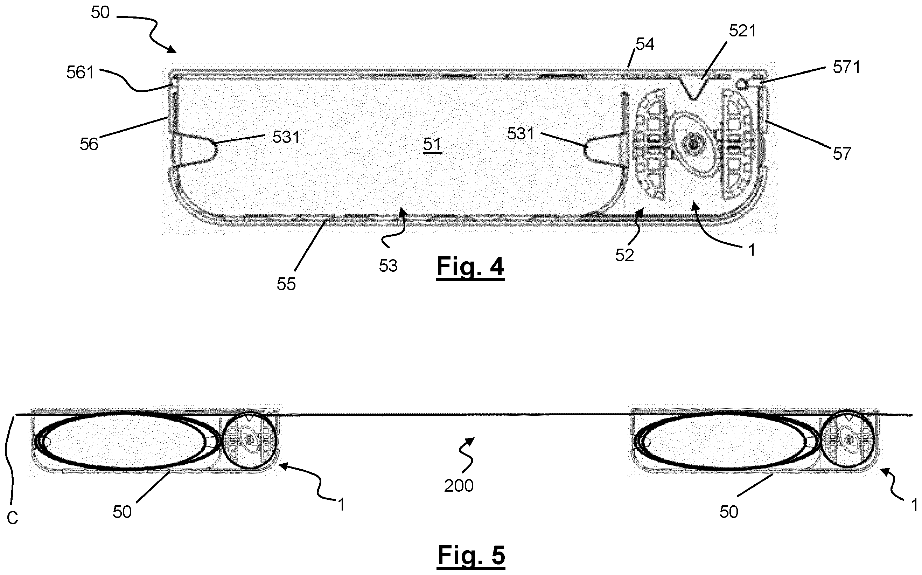

As said above, the tensioning member 1 according to the present invention can be a stand-alone device or it can be associated to a box 50. Figure 4 shows an exemplificative box 50 associated with an optical cable tensioning member 1.

While the box 50 can be of any type, it is preferred that it has an elongate shape as shown in Figure 4. Preferably, the box 50 comprises a floor 51, a first housing portion 52 designed for the tensioning member 1 and a second housing portion 53 for an extra length of optical cable C. Profitably, the box 50 can further comprise a cover, not shown for clarity reasons, for closing the box.

The box 50 has a first long side 54, a second long side 55, a first later side 56 and a second lateral side 57.

Preferably, a first entry/exit opening 561 is provided at the first lateral side 56, in close proximity with the first long side 54 of the box 50. Preferably, on the left part (the one entering in the second housing 53 of Fig.4) there is a clip which presses and holds the cable C strongly to avoid any movement of the cable or fibres in the second housing 53. It means that, the cable will be just tensioned on the right end to absorb the extra length of cable.

Preferably, a second entry/exit opening 571 is provided at the second lateral side 57, in close proximity with the first long side 54 of the box 50.

The arrangement of the first and second entry/exit openings 561, 571 is advantageous because it allows to arrange the optical fiber cable C very close to the first long side 54 of the box. Therefore, when the box 50 is arranged with the first long side 54 close to a wall or corner, the cable C can run very close to such wall or corner in a tensioned state.

Preferably, the direction between the first and second entry/exit openings 561, 571 is substantially tangent to a winding circumference identified by diameter DM.

Preferably, the first housing portion 52 comprises at least one projecting tab 521 to constrain the loop(s) of optical cable C in the proper arrangement around the periphery of the expandable mandrel. The projecting tab 521 is at a distance from the floor 51 of the box.

Preferably, the second housing portion 53 comprises at least one projecting tab 531 to constrain the loop(s) of extra length optical cable in the proper arrangement. Advantageously, there are provided two opposite projecting tabs 531, each of them being at a distance from the floor 51 of the box.

Preferably, the loops of extra length optical cable are loose in the second housing 53.

According to an aspect of the present disclosure there is provided an optical cable tensioning system 200. An example optical cable tensioning system 200 is shown in Figure 5. With this kind of system there is provided the capability to keep the linearity on the cable C between two points.

A system 200 according to the present invention may comprise two or more stand-alone optical cable tensioning members 1. The tensioning members 1 can also be associated to respective boxes 50 as shown in Figure 5.

Advantageously, the system 200 of the present invention allows to have an optical cable C running along a straight line close to a wall or corner. The tension given to the cable C can be properly set thanks to the possibility to tension the cable C at the right tensioning member, at the left tensioning member or at both tensioning members.

According to a third aspect, the present invention provides a method of tensioning an optical cable C. The method comprises winding an optical cable C on the periphery of an expandable mandrel 10, wherein said expandable mandrel 10 comprises two facing brackets 11, 12 and an eccentric rotatable member 30 hinged centrally between the two brackets 11, 12, wherein the step of tensioning comprises expanding a distance DS, DM between the two facing brackets by rotating said eccentric rotatable member 30.

Preferably, the step of expanding a distance between the two brackets 11, 12 comprises rotating the eccentric rotatable member 30 while it is engaging at least partially said first and second brackets 11, 12 to force the brackets to move away one from the other.

The engagement between the brackets 11, 12 and the eccentric rotatable member 30 is preferably through teeth 114, 124, 31, 32.

The step of expanding a distance DS, DM between the two facing brackets 11, 12 comprises linearly translating the brackets 11, 12. In this way, the brackets maintain parallel.

## Claims

1. An optical cable tensioning member (1) comprising an expandable mandrel (10), wherein said expandable mandrel (10) comprises a first bracket (11) and a second bracket (12) forming a cable winding circumference (CR), the first bracket (11) having a first inner surface (113) and the second bracket (12) having a second inner surface (123) which is at a distance (DS) from said first inner surface (113), **characterized in that** said expandable mandrel (10) further
comprises a rotatable central member (30) which is configured, when turned, to increase said distance (DS) and expand said cable winding circumference (CR).

2. The tensioning member (1) of claim 1, wherein said rotatable central member (30) is eccentric so that when the rotatable central member (30) is turned, said distance (DS) between the inner surfaces (113, 123) of the brackets (11, 12) is increased.

3. The tensioning member (1) of claim 1 or 2, wherein said first inner surface (113) comprises first teeth (114), said second inner surface (123) comprises second teeth (124) and said rotatable central member (30) comprises first teeth (31) configured to engage with the first teeth (114) of the first inner surface and second teeth (32) configured to engage with second teeth (124) of the second inner surface.

4. The tensioning member (1) of claim 3, wherein said first teeth (114) of the first inner surface have a first orientation and said second teeth (124) of the second inner surface have a second orientation, wherein said first orientation is opposite with respect to the second orientation.

5. The tensioning member (1) of claim 1, wherein the rotatable central member (30) is a toothed wheel with a circular cross section engaging with toothed racks (114,124) connected to respective brackets (11, 12).

6. The tensioning member (1) of claim 5, wherein a sprocket (115) engages the teeth of at least one toothed rack (114,124).

7. The tensioning member (1) of any of previous claims, wherein the tensioning member further comprises a linear rail guide (40) for moving the first and second brackets (11, 12) along said linear rail guide (40).

8. The tensioning member (1) of any of previous claims, further comprising a box (30).

9. The tensioning member of claim 8, wherein said box (30) comprises a first housing portion (52) for the tensioning member (1) and a second housing portion (53) for an extra length of optical cable (C).

10. The tensioning member (1) of claim 8 or 9, wherein the box (30) has a first long side (54), a second long side (55), a first lateral side (56) and a second lateral side (57), wherein a first entry/exit opening (561) is provided at the first lateral side (56), in close proximity with the first long side (54) of the box and wherein a second entry/exit opening (571) is provided at the second lateral side (57), in close proximity with the first long side (54) of the box.

11. An optical cable tensioning system (200) comprising at least a first tensioning member (1) according to any of preceding claims and at least a second tensioning member (1) according to any of preceding claims and a length of optical fiber cable (C) tensioned between said first and second tensioning members.

12. A method of tensioning an optical cable (C), the method comprising winding an optical cable on the periphery of an expandable mandrel (10), wherein said expandable mandrel (10) comprises two facing brackets (11, 12) and a rotatable central member (30) hinged centrally between the two brackets (11, 12), wherein the step of tensioning comprises expanding a distance (DS, DM) between the two facing brackets (11, 12) by rotating said rotatable central member (30).

13. The method of claim 12, wherein the rotatable central member (30) is eccentric and the step of expanding a distance (DS, DM) between the two brackets (11, 12) comprises rotating the eccentric rotatable central member (30) while it is engaging at least partially said first and second brackets (11, 12) to force the brackets to move away one from the other.

14. The method of claim 13, wherein the engagement between the brackets (11, 12) and the eccentric rotatable central member (30) is through teeth.

15. The method of claim 12, 13 or 14, wherein the step of expanding a distance (DS, DM) between the two facing brackets comprises linearly translating the brackets (11, 12).

## Patentansprüche

1. Ein optisches Kabelspannelement (1), das einen ausdehnbaren Dorn (10) umfasst, wobei der ausdehnbare Dorn (10) einen ersten Bügel (11) und einen zweiten Bügel (12) umfasst, die einen Kabelwickelumfang (CR) bilden, wobei der erste Bügel (11) eine erste Innenfläche (113) und der zweite Bügel (12) eine zweite Innenfläche (123) aufweist, die sich in einem Abstand (DS) von der ersten Innenfläche (113) befindet, **dadurch gekennzeichnet, dass** der ausdehnbare Dorn (10) ferner ein drehbares zentrales Element (30) umfasst, das so konfiguriert ist, dass es, wenn es gedreht wird, den Abstand (DS) vergrößert und den Kabelwickelumfang (CR) ausdehnt.

2. Spannelement (1) nach Anspruch 1, wobei das drehbare zentrale Element (30) exzentrisch ist, so dass, wenn das drehbare zentrale Element (30) gedreht wird, der Abstand (DS) zwischen den Innenflächen (113, 123) der Bügel (11, 12) vergrößert wird.

3. Spannelement (1) nach Anspruch 1 oder 2, wobei die erste Innenfläche (113) erste Zähne (114) umfasst, die zweite Innenfläche (123) zweite Zähne (124) umfasst und das drehbare zentrale Element (30) erste Zähne (31) umfasst, die so gestaltet sind, dass sie mit den ersten Zähnen (114) der ersten Innenfläche in Eingriff kommen, und zweite Zähne (32), die so gestaltet sind, dass sie mit den zweiten Zähnen (124) der zweiten Innenfläche in Eingriff kommen.

4. Spannelement (1) nach Anspruch 3, wobei die ersten Zähne (114) der ersten Innenfläche eine erste Ausrichtung haben und die zweiten Zähne (124) der zweiten Innenfläche eine zweite Ausrichtung haben, wobei die erste Ausrichtung in Bezug auf die zweite Ausrichtung entgegengesetzt ist.

5. Spannelement (1) nach Anspruch 1, wobei das drehbare zentrale Element (30) ein Zahnrad mit kreisförmigem Querschnitt ist, das in Zahnstangen (114, 124) eingreift, die mit entsprechenden Bügeln (11, 12) verbunden sind.

6. Spannelement (1) nach Anspruch 5, bei dem ein Kettenrad (115) in die Zähne mindestens einer Zahnstange (114, 124) eingreift.

7. Spannelement (1) nach einem der vorhergehenden Ansprüche, wobei das Spannelement ferner eine lineare Schienenführung (40) zum Bewegen des ersten und zweiten Bügels (11, 12) entlang der linearen Schienenführung (40) umfasst.

8. Spannelement (1) nach einem der vorhergehenden Ansprüche, das außerdem einen Kasten (30) umfasst.

9. Spannelement nach Anspruch 8, wobei das Gehäuse (30) einen ersten Gehäuseabschnitt (52) für das Spannelement (1) und einen zweiten Gehäuseabschnitt (53) für eine zusätzliche Länge des optischen Kabels (C) umfasst.

10. Spannelement (1) nach Anspruch 8 oder 9, wobei der Kasten (30) eine erste Längsseite (54), eine zweite Längsseite (55), eine erste Querseite (56) und eine zweite Querseite (57) aufweist, wobei eine erste Eintritts-/Austrittsöffnung (561) an der ersten Querseite (56) in unmittelbarer Nähe der ersten Längsseite (54) des Kastens vorgesehen ist und wobei eine zweite Eintritts-/Austrittsöffnung (571) an der zweiten Querseite (57) in unmittelbarer Nähe der ersten Längsseite (54) des Kastens vorgesehen ist.

11. Ein optisches Kabelspannsystem (200), das mindestens ein erstes Spannelement (1) nach einem der vorhergehenden Ansprüche und mindestens ein zweites Spannelement (1) nach einem der vorhergehenden Ansprüche und eine Länge eines optischen Faserkabels (C) umfasst, das zwischen dem ersten und dem zweiten Spannelement gespannt ist.

12. Verfahren zum Spannen eines optischen Kabels (C), wobei das Verfahren das Aufwickeln eines optischen Kabels auf den Umfang eines dehnbaren Dorns (10) umfasst, wobei der dehnbare Dorn (10) zwei einander zugewandte Bügel (11, 12) und ein drehbares zentrales Element (30) umfasst, das mittig zwischen den beiden Bügeln (11, 12) angelenkt ist, wobei der Schritt des Spannens das Ausdehnen eines Abstands (DS, DM) zwischen den beiden einander zugewandten Halterungen (11, 12) durch Drehen des drehbaren zentralen Elements (30) umfasst.

13. Verfahren nach Anspruch 12, wobei das drehbare zentrale Element (30) exzentrisch ist und der Schritt des Vergrößerns eines Abstands (DS, DM) zwischen den beiden Bügeln (11, 12) das Drehen des exzentrischen drehbaren zentralen Elements (30) umfasst, während es zumindest teilweise mit den ersten und zweiten Bügeln (11, 12) in Eingriff steht, um die Bügel zu zwingen, sich voneinander wegzubewegen.

14. Verfahren nach Anspruch 13, wobei der Eingriff zwischen den Bügeln (11, 12) und dem exzentrisch drehbaren zentralen Element (30) über Zähne erfolgt.

15. Verfahren nach Anspruch 12, 13 oder 14, wobei der Schritt des Vergrößerns eines Abstands (DS, DM) zwischen den beiden einander zugewandten Bügeln ein lineares Verschieben der Bügel (11, 12) umfasst.

## Revendications

1. Élément de tension de câble optique (1) comprenant un mandrin extensible (10), dans lequel ledit mandrin extensible (10) comprend un premier support (11) et un second support (12) formant une circonférence d'enroulement de câble (CR), le premier support (11) ayant une première surface interne (113) et le second support (12) ayant une seconde surface interne (123) qui est à une certaine distance (DS) de ladite première surface interne (113),
**caractérisé en ce que** ledit mandrin extensible (10) comprend en outre un élément central rotatif (30) qui est configuré, lorsqu'il est tourné, pour augmenter ladite distance (DS) et étendre ladite circonférence d'enroulement de câble (CR).

2. Élément de tension (1) selon la revendication 1, dans lequel ledit élément central rotatif (30) est excentrique de sorte que lorsque l'élément central rotatif (30) est tourné, ladite distance (DS) entre les surfaces internes (113, 123) des supports (11, 12) est augmentée.

3. Élément de tension (1) selon la revendication 1 ou 2, dans lequel ladite première surface interne (113) comprend des premières dents (114), ladite seconde surface interne (123) comprend des secondes dents (124) et ledit élément central rotatif (30) comprend des premières dents (31) configurées pour se mettre en prise avec les premières dents (114) de la première surface interne et des secondes dents (32) configurées pour se mettre en prise avec des secondes dents (124) de la seconde surface interne.

4. Élément de tension (1) selon la revendication 3, dans lequel lesdites premières dents (114) de la première surface interne ont une première orientation et lesdites secondes dents (124) de la seconde surface interne ont une seconde orientation, dans lequel ladite première orientation est opposée à la seconde orientation.

5. Élément de tension (1) selon la revendication 1, dans lequel l'élément central rotatif (30) est une roue dentée avec une section transversale circulaire se mettant en prise avec des crémaillères dentées (114, 124) reliées aux supports (11, 12) respectifs.

6. Élément de tension (1) selon la revendication 5, dans lequel un pignon (115) se met en prise avec les dents d'au moins une crémaillère dentée (114, 124).

7. Élément de tension (1) selon l'une quelconque des revendications précédentes, dans lequel l'élément de tension comprend en outre un rail de guidage linéaire (40) pour déplacer les premier et second supports (11, 12) le long dudit rail de guidage linéaire (40).

8. Élément de tension (1) selon l'une quelconque des revendications précédentes, comprenant en outre un boîtier (30).

9. Élément de tension selon la revendication 8, dans lequel ledit boîtier (30) comprend une première partie de logement (52) pour l'élément de tension (1) et une seconde partie de logement (53) pour une longueur supplémentaire de câble optique (C).

10. Élément de tension (1) selon la revendication 8 ou 9, dans lequel le boîtier (30) a un premier côté long (54), un second côté long (55), un premier côté latéral (56) et un second côté latéral (57), dans lequel une première ouverture d'entrée/de sortie (561) est prévue au niveau du premier côté latéral (56), à proximité immédiate du premier côté long (54) du boîtier et dans lequel une seconde ouverture d'entrée/de sortie (571) est prévue au niveau du second côté latéral (57), à proximité immédiate du premier côté long (54) du boîtier.

11. Système de tension de câble optique (200) comprenant au moins un premier élément de tension (1) selon l'une quelconque des revendications précédentes et au moins un second élément de tension (1) selon l'une quelconque des revendications précédentes et une longueur de câble à fibres optiques (C) tendue entre lesdits premier et second éléments de tension.

12. Procédé de tension d'un câble optique (C), le procédé comprenant l'enroulement d'un câble optique sur la périphérie d'un mandrin extensible (10), dans lequel ledit mandrin extensible (10) comprend deux supports (11, 12) se faisant face et un élément central rotatif (30) articulé au centre entre les deux supports (11, 12), dans lequel l'étape de tension comprend l'extension d'une distance (DS, DM) entre les deux supports (11, 12) se faisant face en faisant tourner ledit élément central rotatif (30).

13. Procédé selon la revendication 12, dans lequel l'élément central rotatif (30) est excentrique et l'étape d'extension d'une distance (DS, DM) entre les deux supports (11, 12) comprend la rotation de l'élément central rotatif (30) excentrique tandis qu'il se met en prise au moins partiellement avec lesdits premier et second supports (11, 12) pour forcer les supports à s'éloigner l'un de l'autre.

14. Procédé selon la revendication 13, dans lequel la mise en prise entre les supports (11, 12) et l'élément central rotatif (30) excentrique se fait par l'intermédiaire de dents.

15. Procédé selon la revendication 12, 13 ou 14, dans lequel l'étape d'extension d'une distance (DS, DM) entre les deux supports se faisant face comprend le déplacement linéaire des supports (11, 12).
